# EUROPEAN PATENT APPLICATION

(11) **EP 3 875 643 A2**
(43) Date of publication of application: **08.09.2021**
(21) Application number: 21160272.7
(22) Date of filing: 02.03.2021
(51) Int. Cl.: C25D 21/18, C25D 21/22, C25C 3/00, C25D 21/14, C25D 21/20, C23F 1/46, C25D 3/38

(54) **A METHOD OF PROCESSING AN ETCHING WASTE MEDIUM FROM CIRCUIT BOARD AND/OR SUBSTRATE MANUFACTURE**

(30) Priority: 04.03.2020 EP 20160862; 05.05.2020 EP 20172906; 05.05.2020 EP 20172923; 05.05.2020 EP 20172960; 05.05.2020 EP 20172971; 05.05.2020 EP 20172981; 05.05.2020 EP 20172928
(71) Applicant: AT & S Austria Technologie & Systemtechnik Aktiengesellschaft, 8700 Leoben-Hinterberg (AT)
(72) Inventor: Kern, Konstantin, 8700 Leoben (AT); Zanker, Andreas, 8753 Fohnsdorf (AT); Moitzi, Heinz, 8740 Zeltweg (AT); Redl, Alois, 8712 Niklasdorf (AT); Gross, Friedrich, 8700 Leoben (AT); Klocek, Jolanta, 8712 Niklasdorf (AT); Schrei, Martin, 8382 Mogersdorf (AT); Ebinger, Christoph, 70599 Stuttgart (DE)
(74) Representative: Dilg, Haeusler, Schindelmann Patentanwaltsgesellschaft mbH

(57) **Abstract**

It is described a method of processing an etching waste medium from circuit board and/or substrate manufacture, the method comprising:
i) providing a medium to be processed (11), being the etching waste medium, in particular from an etching process (150), wherein the medium to be processed (11) comprises a metal salt to be processed and an acid (15);
ii) processing the medium to be processed (11) in an ion exchange process (145), so that the metal salt to be processed is exchanged by a metal salt, and a metal salt containing medium (10) is obtained from the medium to be processed (11); hereby
a) streaming a first process cycle (170) through the ion exchange process (145), wherein the first process cycle (170) is a first closed loop that yields substantially only elementary metal (50); and
b) streaming a second process cycle (180) through the ion exchange process (140), wherein the second process cycle (180) is a second closed loop that yields substantially only purified water (188) and/or a metal-depleted salt concentrate (186b).

## Description

### Field of the Invention

The invention relates to a method of processing an etching waste medium from circuit board and/or substrate manufacture. Further, the invention relates to a circuit board and/or substrate manufacture industrial plant configured to perform the method. Furthermore, the invention relates to a specific use of an ion exchange process.

Thus, the invention may relate to the technical field of circuit board and/or substrate manufacture. In particular, the invention may relate to the technical field of processing a metal salt-containing medium from the circuit board and/or substrate manufacture (in particular recovering the metal). Furthermore, the invention may relate to the technical field of recycling in the circuit board and/or substrate manufacture (in particular providing a waste water in discharge quality).

### Technological Background

For the production of circuit boards and/or substrates, in principle large amounts of metals, in particular heavy metals (e.g. copper, nickel, gold, silver, palladium, tin, iron) are required. Therefore, in the manufacturing process, metal-containing residues and metal-containing media (in particular solutions), respectively, occur in the different processes.

The metal (-salt) -containing media (and waste- and residue concentrations to be processed, respectively) substantially origin from two different treatment processes in the circuit board and/or substrate manufacture: i) the etching process (e.g. etching of copper foils) and ii) the plating process (e.g. plating with copper layers). In addition, metal (-salt)-containing media to be processed occur during rinsing processes from the etching process as well as from the plating process. These rinsing waters contain only low concentrations of metal, in particular copper. In contrast, the metal (-salt)-containing media to be processed from the etching processes and the plating processes comprise comparatively high concentrations of metal.

A metal (-salt)-containing medium to be processed from the etching process usually contains a metal salt, in which the metal is chemically bonded to the salt of an acid (from the etching process) (for example copper chloride, wherein the chloride origins from hydrochloric acid). A metal (-salt)-containing medium to be processed from the plating process usually also contains a metal salt, in which the metal is chemically bonded to the salt of an acid of the electrolysis (for example copper sulfate, wherein the sulfate origins from sulfuric acid). In addition, a metal (-salt)-containing medium to be prepared from the plating process generally contains foreign metals, for example iron, in high concentrations.

Methods to recover metal from the described metal (-salt)-containing media are principally known. However, only a recovered metal in a highly pure form (e.g. 99% up to 99,99%, in particular approximately 99,9% pure) is of interest for the circuit board and/or substrate manufacture. Such a recovery may e.g. be performed by an electrolysis. However, the above described metal (-salt)-containing media are highly unsuitable for this purpose, since the deposition of pure metal (e.g. copper) is impeded or complicated. High concentrations of acid, hydrogen peroxide (and foreign metals) disable a high-quality electrolysis.

For this reason, waste concentrations from the circuit board and/or substrate manufacture are conventionally disposed in a manner which is cost-intense and not environmentally friendly and not durable, respectively.

### Summary of the Invention

It is an object of the present invention to enable a cost-efficient, environmentally friendly and durable processing of a waste medium (in particular from an etching process) from the circuit board and/or substrate manufacture.

This object is solved by the subject matters according to the independent patent claims. Preferred embodiments result from the dependent patent claims.

According to an aspect of the invention, a method is described of processing an etching (process) waste medium from circuit board and/or substrate manufacture. The method comprising:
i) providing the etching waste medium as a medium to be processed (in particular from an etching process), wherein the medium to be processed comprises a metal salt to be processed and an acid,
ii) processing the medium to be processed in an ion exchange process, so that the metal salt to be processed is exchanged by a metal salt, and a metal salt containing medium is obtained from the medium to be processed, hereby streaming a first process cycle through the ion exchange process, wherein the first process cycle is a first (closed) loop that yields (substantially) only elementary metal (e.g. using an electrolysis process).
In particular, the method may further comprise
streaming a second process cycle through the ion exchange process, wherein the second process cycle is a second (closed) loop that yields (substantially) only purified water and/or a metal-depleted salt concentrate (e.g. using a reverse osmosis process).

According to a further aspect of the present invention, a circuit board and/or substrate manufacture industrial plant is described, comprising:
i) an etching process module that produces an etching waste medium as a medium to be processed, wherein the medium to be processed comprises a metal salt to be processed and an acid,
ii) an ion exchange process module configured to process the medium to be processed, so that the metal salt to be processed is exchanged by a metal salt, and a metal salt containing medium is obtained from the medium to be processed,
iii) a first process cycle (e.g. implemented as a fluid transportation system via an electrolysis module) streaming through the ion exchange process module, wherein the first process cycle is a first closed loop that yields substantially only the elementary metal, and
iv) a second process cycle (e.g. implemented as a fluid transportation system via a reverse osmosis module) streaming through the ion exchange process, wherein the second process cycle is a second closed loop that yields substantially only purified water and/or a metal-depleted salt concentrate.

According to a further aspect of the present invention, it is described a use of an ion exchange process, coupled to an electrolysis process in a first closed loop process cycle and to a membrane filtration process in a second closed loop process cycle, to process a circuit board and/or substrate manufacture etching waste water such that (substantially) only elementary copper, purified water, and/or a heavy metal-depleted salt concentrate are yielded.

According to a further aspect of the present invention, a process control device for regulating the above described method and/or the above described device is discussed. The process control device comprises:
i) a database for capturing at least one process parameter (and an actual value, respectively), in particular a plurality of process parameters, from the running process,
ii) a data model unit which is adapted for storing at least one predetermined process parameter (and a target value, respectively), in particular a plurality of predetermined process parameters, and iii) a calculation device which is adapted for
   a) comparing the captured process parameter with the predetermined process parameter (and the pluralities with each other, respectively),
   b) determining a control operation which is based on the result of the comparison (for example actively compensating a difference between the actual value and the target value), and c) performing the predetermined control operation (e.g. adapt a flow rate, etc.).

According to a further aspect of the present invention, a computer program product for controlling a method for processing an etching waste medium from the circuit board and/or substrate manufacture is described, which computer program product, when it is executed by one or more processors (and one or more computers, respectively), controls the method (as described above) and/or the device (as described above) and/or the process control device (as described above).

In the context of this document, the term "metal salt-containing medium" may in particular denote any (liquid) medium which comprises a metal salt. A metal salt is a chemical compound between a metal and an acid. Examples for such a metal may encompass: copper, nickel, gold, silver, cobalt, cadmium, magnesium, sodium, palladium, tin. Examples for acids may encompass: sulfuric acid, hydrochloric acid, nitrous acid, phosphoric acid; wherein the metal salt is correspondingly present e.g. as sulfate, chloride, nitrate, or phosphate. Correspondingly, a metal salt may be copper sulfate or copper chloride, for example. This may be present in the metal salt-containing medium as metal ion and salt ion. A metal salt-containing medium, besides metal salt, may comprise a solution which may be aqueous or acidic, for example, in which the metal salt is dissolved. For example, besides water, the medium may also comprise hydrochloric acid and/or sulfuric acid. In an example, the metal salt-containing medium origins from the manufacture of circuit boards and/or substrates and may comprise corresponding residues. Furthermore, the metal salt-containing medium may be processed, such that substantially only the metal salt is present. In an example, the metal salt-containing medium is (substantially) free from (undesired) foreign metal (such as iron). In a further example, the metal salt-containing medium comprises (residues of) foreign metal. The term "medium to be processed" may denote a medium that will be further processed in subsequent process steps. Hereby, the medium to be processed may comprise a metal salt to be processed (e.g. the salt will be exchanged by another salt) and, when the metal salt to be processed is exchanged by a metal salt, a medium is obtained from the medium to be processed. In an exemplary embodiment, the metal salt to be processed comprises copper chloride and the metal salt comprises copper sulfate.

In the context of this document, the term "process cycle" may in particular denote an amount of process steps (and/or process modules) that are connected in a cycle-like manner. In particular, a process cycle may be arranged so that the product of one first step is fed back to a second step that is process upstream with respect to the first step. More in particular, the product of a final step is fed back as an input to the first step. Such embodiments may be termed closed loop process cycles. Preferably, a closed loop process cycle is performed such that no waste products are generated. This may for example be realized using a third process cycle, wherein a strong acid from an etching process is separated in a membrane dialysis and is then, via an enrichment step, fed back to the etching process. In another embodiment, a first process cycle may yield as a waste product only elementary metal (e.g. by streaming an acidic medium through an ion exchange process, transporting the immobilized metal ions to an electrolysis process that produces elementary metal, and feeding back the metal-depleted acidic medium), wherein the elementary metal is, however, a desired product that can be fed back to another manufacturing process. In another embodiment, a second process cycle may yield as a waste products only purified water and a metal-depleted (and thus easy to discharge) salt concentrate, e.g. by streaming a further acidic medium through the ion exchange process, through a reverse osmosis process, and back to the ion exchange process).

In the context of this document, the term "foreign metal" may in particular denote a metal which is present in a metal salt-containing medium (in a dissolved manner), but is not desired there (for certain applications). Depending on the application case, examples for such foreign metals (and their ions, respectively) may encompass: iron (Fe³⁺, Fe²⁺), lead (Pb²⁺), tin (Sn²⁺), molybdenum (Mo³⁺), nickel (Ni²⁺), cobalt (Co²⁺), indium (In³⁺), cadmium (Cd²⁺), zinc (Zn²⁺), chromium (Cr³⁺), sodium (Na⁺), palladium (Pd²⁺). In an embodiment, a metal salt-containing medium shall be processed such that the metal of the metal salt is present in elementary form and can be recycled. The foreign metals may cause a disturbance or failure of the processing (e.g. by electrolysis), whereby a previous removal of the foreign metals may be recommended. In an exemplary embodiment, the metal salt-containing medium origins from a plating process and elementary copper shall be obtained from the metal salt copper sulfate. Due to the plating process, the metal salt-containing medium may comprise foreign metals, in particular iron. The foreign metals may be present as foreign metal salt (e.g. iron sulfate). This may highly disturb the electrolysis of copper sulfate (inhibits the copper deposition at the cathode). In a lower (residual) concentration, the foreign metal can be oxidized during a recovery, while the metal is reduced (and deposited, respectively).

In the context of this document, the term "foreign metal- and metal salt-containing medium" may in particular denote a medium which comprises a metal salt-containing medium (as described above) and a foreign metal (as described above). In an embodiment, the foreign metal- and metal salt-containing medium origins from the plating. In particular, the foreign metal- and metal salt-containing medium is a highly acidic medium (e.g. with a pH-value < 1). This may be caused by the fact, that the foreign metal- and metal salt-containing medium comprises a strong acid, such as sulfuric acid, in a high concentration (e.g. in the range 100 to 200 g/L).

In the context of this document, the term "processing" may in particular denote that a medium to be processed (in particular a medium with at least one undesired property) is processed within one or more process steps, such that a processed medium (in particular a medium which does not comprise the undesired property anymore) is present. For example, a medium to be processed may be a metal salt-containing medium in which at least one metal salt is undesired. Correspondingly, the medium to be processed may be processed (e.g. by membrane dialysis and performing a chemical reaction) such that, as processed medium, a metal salt-containing medium is present which does (substantially) not comprise the undesired metal salt anymore.

In the context of this document, the term "partial stream" may in particular denote that a medium (in particular a liquid medium), within a (manufacturing) process, is conducted in a certain (desired) process direction. In other words, the flow of a medium within a (manufacturing) process may be controlled in a desired manner. The term "partial stream" may in particular relate to the fact that the corresponding (manufacturing) process comprises at least two such streams (from different process steps). Each single stream (of the preferably liquid medium) within the same (manufacturing) process and the same industrial plant, respectively, may be denoted as partial stream. The partial streams may be (specifically) controlled flows of waste media of the production. At least two (in particular three or more) of the at least partial streams may be combined to a total stream. In an embodiment, a first partial stream comprises a processed metal salt-containing medium (e.g. comprising copper sulfate and hydrochloric acid) and a waste stream from an etching process of the circuit board and/or substrate manufacture, respectively, while a second partial stream comprises a processed metal salt-containing medium (e.g. comprising copper sulfate, iron sulfate and sulfuric acid) and a waste stream from a plating process of the circuit board and/or substrate manufacture, respectively. In an example, these may be merged to a total stream which is then processed, e.g. to recover the metal of the metal salt in elementary form.

In the context of this document, the term "circuit board and/or substrate manufacture" may in particular denote a process for manufacturing circuit boards and/or substrates, which is performed in an industrial plant, for example a circuit board factory. The term "circuit boards" may in particular relate to printed circuit boards (PCB), while the term "substrates" may e.g. relate to substrates for semiconductor chips, such as integrated circuits or organic interposers. A circuit board and/or substrate manufacture usually encompasses an etching process in which metal is removed by etching, such that desired metal structures are obtained, and a plating process in which metal is disposed by plating. A starting material for a circuit board and/or substrate manufacture encompasses substantially the metal and electrically isolating material, frequently an organic material, such as resin. The product of the process may be the finished circuit board and the substrate, respectively, or an intermediate product as well.

In this document, the term "etching process" may in particular denote a process of the circuit board and/or substrate manufacture which comprises etching metal, in particular copper, to thereby provide a desired metallic (electrically conductive) structure. According to an exemplary embodiment, this process may be performed as follows: a photoresist protects copper paths which shall not be etched away, while copper areas which shall be etched away are not covered with the photoresist. At first, for this purpose, the entire copper layer is coated with the photoresist. Then, through a mask, the photoresist is developed by UV-light. The mask passes UV-light only at positions, where the photoresist shall remain (i.e. where the desired conductor traces shall be provided). During developing, the resist (and the polymer, respectively) is cross-linking at the positions which have been exposed to UV-light. After developing, the photoresist which was not exposed (and not developed, respectively) can be easily washed away. Subsequently, the panel (and the component carrier preform, respectively) is etched. The photoresist protects the conductor traces, while the copper which is not covered with photoresist is etched/removed. When the etching process is finished, the photoresist is removed and peeled off, respectively (the resist is cross-linked and solid), and the conductor traces remain. The stripped photoresist can be precipitated at a later time by iron chloride.

In the context of this document, the term "plating process" may in particular denote a process within a circuit board and/or substrate manufacture wherein plating is performed. Plating may denote the electrochemical deposition of metallic precipitates on devices. As device serves a circuit board and/or a substrate on which the metallic precipitate (e.g. copper) may serve as electrically conductive layer structure and conductor trace, respectively, for example. Furthermore, e.g. holes (vias) can be made electrically conductive by laterally plating them or by completely filling them by plating. In an example, a current is applied to an electrolytic bath. At the positive pole (anode), the metal which shall be disposed is located (e.g. copper or nickel), at the negative pole (cathode), the object to be coated is located (e.g. a circuit board). By the electric current, the metal ions deposit on the object by reduction. In an example, this process may be realized as a sequence of electrolytic baths. The plating process may be performed continuously or discontinuously (in a batch-wise manner). Usually, an amount of metal salt-containing medium is obtained in this process as waste concentrate ("bleed"). Due to the process, this generally contains foreign metal and a high acid content, so that a recycling of the metal (the metal salt) is conventionally not possible in an economic manner.

In the context of this document, the term "reaction cell" may in particular denote any reactor which enables to recover the metal of the metal salt in an elementary and highly pure form from a metal salt-containing medium. The term "recovering") may in particular denote that the elementary metal from the metal salt-containing medium (for the purpose of reusing) is separated and isolated, respectively. An example for a reaction cell may be an electrolysis cell. The term "electrolysis" may in particular mean that an electric current is utilized, to enable a chemical redox reaction. Therefore, an electrolysis cell may comprise: a direct voltage source for providing the electric current, which is coupled with a cathode (minus-pole) and an anode (plus-pole). The voltage source may cause an electron deficiency in the anode and an electron excess in the cathode, In an embodiment, metal salt-containing medium is added to the electrolysis cell, which comprises copper as metal and iron as foreign metal. Copper comprises the higher redox potential (is more noble) and is thus reduced and deposited, respectively, at the cathode. In contrast, iron is oxidized at the anode. In an exemplary embodiment, the reaction cell comprises preferably a multiplicity (e.g. twenty) electrolysis modules, in which elementary metal (e.g. copper) is deposited at a cathode. In this reaction, oxidation of the foreign metal (of the electrolyte) occurs, which is chemically less noble than the metal to be deposited. In an example, recovering may be realized as a sequence of electrolytic baths. Recovering may be performed continuously or discontinuously (batch-wisely).

In the context of this document, the term "ion exchange process" may in particular denote any process that is suitable for exchanging ions of a liquid medium. The term "ion exchanger" may encompass materials (and devices, respectively) by which dissolved ions can be replaced by other ions of the same charge (positive or negative) (see detailed description further below).

In the context of this document, the term "dialysis" may in particular denote that a concentration-driven membrane process is used to remove molecules (in particular ions) from solutions. In an embodiment, a metal salt-containing medium is provided via a first feed (dialysate feed) at a first side of the membrane, and via a second feed (diffusate feed), a further medium (e.g. water) is provided at the second (opposing the first) side of the membrane. The membrane may be semipermeable and enables anions (e.g. chloride) to pass (anion-membrane), while cations (e.g. Cu²⁺) are not enabled to pass. Thus, cations are enriched in the metal salt-containing medium as dialysate, while anions are enriched in the further medium as diffusate. In the example of chloride-anions, the diffusate becomes highly acidic, such that also the term "acid dialysis" may be used.

For the membrane dialyses which are described in the following, respectively the same membrane may be utilized or (preferably) different membranes are used. An anion-membrane may be functionalized e.g. with bromium (Br⁻), wherein the carrier material may be PET or PVC, for example. In certain cases, the metal salt-containing solution may include hydrogen peroxide (H₂O₂). In this case, preferably an oxidation-resistant membrane may be used, which is based e.g. on PEEK (polyetheretherketone).

In the context of this document, the term "regenerating" may in particular denote that a (selective) ion exchanger is transferred from a first operating state to a second operating state. In particular, in the first operating state, a metal (in particular a cation) is adsorbed at the ion exchanger (and ion exchange resin, respectively). Further in particular, in the second operating state, the metal is substantially desorbed. Thus, in the second operating state, the ion exchanger may be operable to be loaded again and may correspondingly assume the first operating state again. Advantageously, regenerating may be repeated multiple times. In an example, regenerating is performed by a regenerating medium, in particular a regenerating acid, such as sulfuric acid and/or hydrochloric acid. In regenerating, the regenerating medium may desorb absorbed metal. After purifying, the regenerating medium may be used again. In a further example, the regenerating medium does not have to be purified, so that the metal concentration in the regenerating medium increases with each (regenerating) cycle through the ion exchanger. In this way, in this document, "regenerating" may also be enriching a metal to be recovered.

In other words, according to an embodiment, the metal concentration increases, while the acid concentration decreases. The regenerating acid which already contains desorbed metal ions, is reused until the obtained acid concentration is too low to release the metal ions from the resin. Then, the acid concentration decreases, since protons (H⁺) of the acid continuously remain at the resin.

In the context of this document, the term "valuable material cycle" may in particular denote that a multiplicity of valuable materials (substances which are required for the manufacturing method, e.g. main components and/or starting materials/raw materials) are recycled within a manufacturing process (and an industrial plant, respectively) constantly (and continuously, respectively). In particular, a multiplicity of valuable materials from single process steps are processed and/or recovered, to be supplied to the single process steps again, The valuable materials leave a process step as constituent of a waste medium and as occurring residue, respectively, but may be fed back after a process-internal process within the process. Valuable materials may encompass e.g. heavy metals, such as copper, nickel, gold etc, These may occur in different process steps within metal salt-containing media. The occurring residues may be conducted in partial streams (the flow of a medium may be specifically controlled) and may be at least partially commonly processed, such that the valuable materials may be recovered. From the partial streams which finally (in particular via processing a total stream) are fed back to the single process steps, separating streams may be separated, which in turn may be fed back to the single process steps and/or may be supplied to the partial streams again via processes, such as enriching (and adjusting the concentration, respectively).

In the context of this document, the term "medium in discharge quality" may in particular denote a (liquid) medium which is allowed to be conducted into a wastewater treatment plant and/or an aquatic environment in compliance with legal standards and boundary values. In an example, the medium in supply quality comprises (substantially) no main components of the circuit board/substrate manufacture, but merely consists of water, (non-heavy metal) salts, and (possibly) organic material. In a preferred embodiment, the medium in supply quality comprises (substantially) no heavy metal anymore. A medium in supply quality may comprise organic residues which may be removed in wastewater treatment plants or e.g. by an activated carbon filter.

In an exemplary example, the medium in discharge quality comprises a discharge quality in wastewater treatment plants. The concentration of heavy metal may be 15 mg/L or less, in particular the concentration of copper may be 0,5 mg/L or less (and thus is within the legal boundary values of the Republic Austria, for example) the medium in discharge quality may be purified (e.g. in a process-internal wastewater treatment plant), such that the medium may be supplied to aquatic environments. This purification may not relate to heavy metals, but to organic matter residues. These may be simply removed, e.g, by activated carbon filters, For example, after purifying, the CSB (chemical oxygen demand), as measure for the concentration of organic compounds, in the medium in discharge quality may be less than 300 mg/L, in particular less than 75 mg/L (further in particular less than 65 mg/L). The CSB value may specify the amount of oxygen (in mg/L) which would be required for the oxidation of the oxidizable substances, if oxygen is the oxidizing agent. For example, this boundary value is 75 mg/L in Austria by law. The CSB boundary value for wastewater treatment plants may strongly vary and is 300 mg/L in an example.

In the context of this document, the term "process control device" may in particular denote each device (or plurality of devices) which are suitable for performing a process control, wherein the process (at least partially) concerns a circuit board and/or substrate manufacture. In particular, the process control device is adapted to (at least partially) control and regulate, respectively, a valuable material cycle, wherein residues of the production are fed back such that substantially no (heavy metal and/or acid) wastes occur. For this purpose, the process control device in particular may comprise a database (unit) and a data model unit, wherein the former stores captured processed data, while the latter stores intended desired process data. The process control device may be coupled with a multiplicity of sensors and measuring devices, to determine actual parameters at different process stations in this manner. Furthermore, the process control device may comprise a calculation device which compares the captured parameters with the desired ones and, based thereon, determines and performs a control operation. In a preferred embodiment, the process control device comprises a self-learning algorithm (AI) by which controlling and regulating, respectively, of the process can be continuously improved.

In the context of this document, the term "substantially" may be construed such that negligible residues and/or pollutions may be encompassed which are not removable with acceptable effort anymore. These negligible residues and pollutions, respectively, are (intentionally) not desired in an embodiment, but cannot be removed with a reasonable effort anymore. For example, a medium with discharge quality may be substantially free from heavy metals, which may denote that negligible residues and pollutions, respectively (e.g. in the lower percent-, per mill-, or even ppm-range) may be present. The skilled person understands that, despite these residues and/or pollutions are not desired, they can nevertheless not be separated in a manner with an acceptable technical effort. In particular, the term "discharge quality" may denote, that there are "substantially" no heavy metals, since the heavy metal concentration consists only of residues/pollutions and is so low, that discharge in an aqueous environment is allowed.

In the context of the present document, the term "(printed) circuit board" (PCB) may in particular denote a substantially plate-shaped component carrier (which may be flexible, rigid or semi-flexible), which is formed by laminating multiple electrically conductive layer structures with multiple electrically isolating layer structures, for example by applying pressure and/or by supplying thermal energy. As preferred materials for PCB technology, the electrically conductive layer structures are made of copper, whereas the electrically isolating layer structures may comprise resin and/or glass fibers, so-called prepreg or FR4 material, The different electrically conductive layer structures may be connected to each other in a desired manner by forming through openings through the laminate, for example by laser drilling or mechanical drilling, and by filling them with electrically conductive material (in particular copper), wherein thereby vias as through opening connections are formed. Besides one or more components which may be embedded in a printed circuit board, a printed circuit board is typically configured for receiving one or more components on one or both opposing surfaces of the plate-shaped printed circuit board. They may be connected to the corresponding main surface by soldering. These components may also be embedded. A dielectric part of a PCB may encompass resin with reinforcing structures (for example glass fibers or glass spheres).

In the context of the present document, the term "substrate" may in particular denote a small component carrier which has substantially the same size as a component (in particular an electronic component) which is to be mounted thereon (as in a chip scale package (CSP)). In particular, a substrate may denote a carrier for electric connections or electric networks or also a component carrier which is comparable with a printed circuit board (PCB), however with a distinctly higher density of laterally and/or vertically arranged connections. For example, lateral connections are conductive paths, whereas vertical connections may be boreholes, for example. These lateral and/or vertical connections are arranged in the substrate and may be used to provide electrical and/or mechanical connections of housed components or unhoused components (for example dies), in particular of IC chips, with a printed circuit board or an intermediate printed circuit board. Thus, the term "substrate" also includes "IC substrates". A dielectric part of a substrate may encompass resin with reinforcing particles (for example reinforcing spheres, in particular glass spheres).

The substrate or the interposer may consist of at least one glass layer (silicon (Si)) or a photostructurable or a dry-etchable organic layer. As organic material/organic layer, an epoxy-based build up material (for example epoxy-based build up film) or polymer compounds such as polyimide, polybenzoxazole, or benzocyclobutene-functionalized polymers may be used, for example.

In an embodiment, the component carrier is a laminate-type component carrier. In such an embodiment, the component carrier is a composite made of multiple layer structures which are stacked and are connected to each other by applying a pressing force and/or heat.

In an embodiment, at least one of the electrically conductive layer structures comprises at least one of the group consisting of copper, aluminum, nickel, silver, gold, palladium, magnesium, and tungsten. Despite copper is typically preferred, also other materials and coated versions thereof are possible, in particular coated with a supra-conductive material, such as graphene.

In this document, the term "heavy metal" may in particular denote a metal which comprises a density larger than 5,0 g/cm³ (alternatively larger than 4,5 g/cm³). This includes e.g. copper, nickel, cobalt, gold, silver, palladium, tungsten, tin, zinc, iron, lead, chromium, rhodium, cadmium, etc. According to this definition, aluminum, silicon, sodium, potassium, calcium, magnesium, etc. are not denoted as heavy metal, for example.

According to an exemplary embodiment, the invention may be based on the idea that a cost-effectively, ecologically and durably processing of metal salt-containing etching waste media of the circuit board and/or substrate manufacture is enabled in an efficient and robust manner (within a valuable material cycle), if an ion exchange process is integrated between two closed loop process cycle, wherein the first process cycle yields only elementary metal and the second process cycle yields only purified water and/or a metal depleted salt concentrate.

Conventionally, wastes and waste concentrates (rich in metal salts and acids) from the circuit board and/or substrate manufacture are disposed in a cost-intense and not ecological and not durable manner, The wastes from the etching process usually are highly acidic and are thus predestinated for being elaborately disposed as special waste. A recovery in a qualitatively high manner (which is mandatory for recycling) thus appears not possible in a cost-efficient manner.

It has now been surprisingly found, that economically recovering (in particular of elementary metal) from metal salt-containing waste media is possible. After processing, whereby costs and efforts can be saved, it is possible to feed back the recovered materials to the different process steps. For example, elementary copper may be directly fed back to the plating process, while separated acid may be fed to the etching process. In preferred embodiments, recovering may be performed continuously, so that occurring wastes from the different process steps can be permanently processed and the recyclates may be directly provided to the single process steps.

Advantageously, conducting and processing the streams is performed such that the high acid concentration does not disturb, but the acids themselves are maintained as part of the treatment process in the valuable material cycle and are fed back. Since these processes may be water-intensive, the purified water can be advantageously fed back to the different processes.

While metal salt-containing media from the circuit board and/or substrate manufacture conventionally (amongst others due to the high concentration of foreign metal and acid) were considered as waste product to be elaborately disposed, it is now described in complete contrast, that economically, efficiently feeding back of metal and acid within one and the same production process is possible.

### Exemplary Embodiments

According to an exemplary embodiment, the metal in the metal salt and the metal in the metal salt to be processed is the same metal. Said metal is in particular at least one of the group which is consisting of: copper, nickel, cobalt, tin, cadmium, magnesium, sodium, silver, gold. Thereby, an industrially relevant metal is efficiently recovered instead of cost-intensively discharged.

According to a further exemplary embodiment, the salt in the metal salt (e.g. copper sulfate) and the salt in the metal salt to be processed (e.g. copper chloride) are different salts. Said salts comprise at least two of the group which consists of a chloride, a sulfate, a nitrate, a phosphate. This may have the advantage that a multiplicity of metal salts to be processed may be process-internally converted into desired metal salts in a flexible manner.

According to an exemplary example, copper in form of copper chloride (as metal salt to be processed) and hydrochloric acid as acid occur from the etching process as medium to be processed. The high content of chloride-ions promotes the uncontrollable formation of chlorine gas during recovering, e.g. an electrolysis. Additionally, chloride-ions may co-deposit at the electrolysis-electrode, whereby the purity of the deposited copper is negatively influenced.

According to a further exemplary embodiment, the first process cycle further comprises:
i) streaming a further acid (in particular, the further acid comprises at least one of the group which is consisting of: sulfuric acid (H₂SO₄), hydrochloric acid (HCI), nitrous acid (HNO₃), phosphoric acid (H₃PO₄)), being different from the acid, through the ion exchange process, so that the further acid removes the metal from the ion exchange process (e.g. desorbs metal ions from ion exchange resin), in order to provide the metal salt containing medium (e.g. a copper sulfate enriched medium) (the further acid may also be termed regenerating medium (that comprises/consists of the further acid)),
ii) transporting the metal salt containing medium to an elementary metal recovery process to obtain the elementary metal and the further acid from the metal salt containing medium (e.g. by electrolysis), and
iii) feeding back the (metal-depleted) further acid (the metal has been removed as elementary metal) to the ion exchange process (as a regenerating medium). In this manner, an acidic medium (further acid) is streamed in a closed loop of the first process cycle. The acid of the acidic medium does not have to be discharged in a cost-intensive manner but is kept in a valuable material cycle. Thus, the waste product of the first process cycle is (substantially) only the elementary metal that is actually a valuable recycle material.

The further acid/acidic medium may also be termed "regenerating medium" of the ion exchange process. Such a regenerating medium may comprise a high acid concentration, in particular ≥ 100 g/L, further in particular ≥ 200 g/L, further in particular ≥ 250 g/L (e.g. of sulfuric acid).

In an example, wherein the metal is copper, the medium to be processed comprises copper chloride, and the further acid comprises sulfuric acid, the following reactions may take place:

CuCl₂ (in medium to be processed) → 2 Cl⁻ (in metal-depleted acid medium) + Cu²⁺ (immobilized),

and then

Cu²⁺ (immobilized) + H₂SO₄ (in further acid) → CuSO₄ (in metal salt- containing medium) + 2H⁺ (immobilized).

During the regeneration, the Cu²⁺ ions are thus exchanged by two H⁺ ions and an enriched electrolyte of H₂SO₄ and CuSO₄ is obtained, which can be directly used in the electrolysis (metal-enriched electrolyte).

Besides the described example of exchanging copper chloride to copper sulfate, also the following salt exchange reactions (respectively with the corresponding acids) may take place, for example (depending on the educt, both directions may be feasible):

NiCl₂ + H₂SO₄ ↔ NiSO₄ + 2 HCl

NiCl₂ + 2 HNO₃ ↔ Ni(NO₃)₂ + 2 HCl

COCl₂ + H₂SO₄ ↔ CoSO₄ + 2 HCl

CoCl₂+ 2 HNO₃ ↔ Co(NO₃)₂ + 2 HCl

3 CoCl₂ + 2 H₃PO₄ ↔ Co₃(PO₄)₂ + 6 HCl

SnCl₂ + H₂SO₄ ↔ SnSO₄ + 2 HCl

SnCl₂ + 2 HNO₃ ↔ Sn(NO₃)₂ + 2 HCl

CdCl₂ + H₂SO₄ ↔ CdSO₄ + 2 HCl

CdCl₂ + 2 HNO₃ ↔ Cd(NO₃)₂ + 2 HCl

3 CdCl₂ + 2 H₃PO₄ ↔ Cd₃(PO₄)₂ +6 HCl

MgCl₂ + H₂SO₄ ↔ MgSO₄ + 2 HCl

MgCl₂ + 2 HNO₃ ↔ Mg(NO₃)₂ + 2 HCl

3 MgCl₂ + 2 H₃PO₄ ↔ Mg₃(PO₄)₂ + 6 HCl

2 NaCl + H₂SO₄ Na₂SO₄ + 2 HCl

NaCl + HNO₃ ↔ NaNO₃ + HCl

3 NaCl + H₃PO₄ ↔ Na₃PO₄ + 3 HCl

According to a further embodiment, the elementary metal recovery process comprises an electrolysis process, wherein the metal salt-containing medium resembles a metal-enriched electrolyte entering the electrolysis process, and wherein the further acid resembles a metal-depleted electrolyte leaving the electrolysis process. This may provide the advantage, that a medium being suitable for electrolysis is provided without additional effort. The elementary metal may be recovered by electrolysis to a purity of around 99.999%, which may be necessary in order to fed it back to the manufacturing processes.

According to a further embodiment, the metal salt-containing medium is applied alone or in combination with other metal salt-containing media from the circuit board and/or substrate manufacture as a metal-enriched electrolyte. Processing (and adjusting the composition, respectively) of such a stream (or total stream) may comprises at least one of the following features:
i) filtering organic constituents by a filter, preferably an activated carbon filter, from the metal salt-containing medium (the electrolyte).
ii) separating (oxidized) foreign metal (in particular iron) from the metal salt-containing medium (the electrolyte) by a further ion exchanger. This may have to advantage that the metal salt-containing medium is purified as electrolyte, while the foreign metal is obtained as raw material for other process steps.
iii) separating acid (in particular sulfuric acid) from the metal salt-containing medium (the electrolyte). This enables selectively adjusting (readjusting), wherein the separated substances are at least partially method-internally reused.

According to a further embodiment, the elementary metal is recovered from the metal salt-containing medium in a reaction cell (in particular by electrolysis). The elementary metal (e.g. copper) of the metal salt-containing medium shall be recovered in the reaction cell in a (highly) pure form, to be resupplied to a/the process for manufacturing circuit boards and/or substrates. In particular, the obtained elementary metal is fed back to a plating process.

According to a further embodiment, the second process cycle further comprises:
i) streaming the medium to be processed through the ion exchange process, wherein the medium to be processed is separated into the metal, which then remains in the ion exchange process (e.g. adsorbed by an ion exchange resin) and a metal-depleted (hydrochloric) acid medium,
ii) processing the metal-depleted acid medium in a water treatment process, so that the purified water is obtained, and using the purified water according to at least one of the group which consists of:

a) feeding back the purified water to the ion exchange process,
b) feeding back the purified water to a further circuit board and/or substrate manufacture process (e.g. membrane dialysis, dilution processes, rinsing water treatment processes, etc.),
c) discharging the purified water as a water in discharge quality.

This may provide the advantage that a highly acidic medium (which is conventionally discharged in a cost-intensive and non-environmentally friendly manner) is efficiently processed to a purified water. Since the described processes may be very water-intensive, it may be highly desirable to continuously recycle process water.

The medium (water) in discharge quality comprises (substantially) no main components (in particular no heavy metal) of the circuit board/substrate manufacture anymore, but merely consists of water, salts, and organic material.

According to a further embodiment, the water treatment process comprises a membrane filtration process, in particular a reverse osmosis process, wherein the permeate comprises the purified water, and wherein the concentrate comprises a salt concentrate. This may provide the advantage, that an established industry process can be directly implemented to yield purified water that can be recycled process-internally.

The term "membrane filtration" may refer in this context to an established water purification process that uses a partially permeable membrane to separate ions, undesired molecules and larger particles from water. Examples for membrane filtration may include micro-filtration, nano-filtration, and reverse osmosis. In reverse osmosis, an applied pressure may be used to overcome the osmotic pressure. Thereby, reverse osmosis may remove many kinds of dissolved and suspended chemical species as well as biological ones (principally bacteria) from water. A reverse osmosis process may yield two products: a permeate (the purified water) and a concentrate (a salt concentrate, in particular a metal-salt).

According to a further embodiment, the second process cycle further comprises: feeding the salt concentrate back to the ion exchange process, so that metal of the salt concentrate remains in the ion exchange process, and thereby providing the metal-depleted salt concentrate.

The salt concentrate is in particular a metal salt concentrate that still contains (heavy) metal from the etching process. Thus, the metal salt concentrate may not be suitable to be discharged. As a consequence, and in order to further increase the yield of elementary metal, the salt concentrate is transported (preferentially diluted, in particular diluted with purified water and/or rinsing water) back to the ion exchange process. Now, the metal may be removed again from the diluted metal salt concentrate (e.g. adsorbed by ion exchange resin) and, in particular after several cycles (e.g. three, seven, etc.) in the second process cycle, the metal salt concentrate has become a metal-depleted salt concentrate.

According to a further embodiment, the metal-depleted salt concentrate is (substantially) free of heavy metals (in particular contains only salt and optionally water/organics) and may be discharged in a low cost and environmentally friendly manner,

According to a further embodiment, the method further comprises: adding a base (e.g. sodium hydroxide) to the metal-depleted acid medium, wherein the base and the acid of the metal-depleted acid medium form the salt of the salt concentrate (e.g. sodium chloride). This may provide the advantage that a strong acid is neutralized in a cost-efficient manner.

According to a further embodiment, the ion exchange process comprises applying an ion exchanger, in particular wherein the ion exchanger comprises an ion exchange resin. Ion exchangers may be realized e.g. as columns which are filled with an ion exchange material, or as membranes through which a solution streams. The ions to be exchanged are bound and adsorbed, respectively, at the ion exchange material. In an example, an ion exchanger comprises a selective ion exchange resin, further in particular a double-functionalized ion exchange resin.

In an embodiment, the carrier material of the ion exchange resin of the ion exchanger comprises polystyrene. In particular, it comprises two functionalized groups (double-functionalized ion exchange resin), e.g. i) a phosphonic acid residue, and ii) a sulfonic acid residue. The first acid group comprises a higher pKs value than the second acid group. The acid with the higher pKs value is the weaker acid and more reluctantly undergoes a pyrolysis than the acid with the lower pKs value (strong acid). Thereby, during the regeneration, the foreign metal may be easier desorbed by the resin.

According to an embodiment, it has surprisingly turned out that precisely the use of a special ion exchange resin with two functional groups enables an (efficient) desorption of the metal (in particular iron).

In an exemplary example, the ion exchanger is constructed with two stages. The first ion exchanger (upstream) may comprise a strongly acidic ion exchange resin to adsorb the majority of the metal. The second ion exchanger (downstream) may comprise a weakly acidic ion exchange resin that adsorbs the remaining metal (in particular to such an extend that the metal-depleted acidic medium has discharge quality (from a heavy metal content point of view).

In an exemplary example, the strongly acidic ion exchange resin may adsorb a(ny) cation applied to the resin. Thus, the initial ion exchange resin may not be a selective ion exchange resin. However, the strongly acidic ion exchange resin may have a significantly increased adsorption capacity, which may be considered advantageous. In a case, where the amount of (different) cations is not significant, such a lack of selectivity may function well. The weakly acidic ion exchange resin may selectively adsorb the residual amount of copper. In a subsequent process step, the pH value may be increased. Otherwise, sodium ions may be introduced in the process, which would further contaminate the electrolyte (and also the capacity of the initial ion-exchange resin would decrease, as sodium would adsorb onto the resin).

According to a further embodiment, the ion exchange process comprises applying a liquid/liquid extraction. In a preferred embodiment, the liquid/liquid extraction may be performed using a hydrocarbon-based diluent with a high flash point as an extraction medium (hydrocarbon-based ion exchange medium). Such a hydrocarbon diluent can form water-insoluble complexes with various metallic cations, e.g. copper. During the ion exchange process, the following reaction may take place: 2 RH_{(org)} + Cu²⁺_{(aq)} → R₂Cu_{(org)} + 2H⁺_{(aq)}.
The hydrocarbon diluent may hereby act similar like an ion exchange resin, as it reversibly takes up cations (in particular copper) by an ion exchange reaction. Further, the cation is then also exchanged by two H⁺ ions.

In an example, the concentrated and deacidified medium to be processed (e.g. copper chloride containing) stream will be (ion) extracted with the high flash point hydrocarbon diluent. Both liquids are not miscible with each other, but during the ion extraction/exchange process, these two liquids will be brought into close contact with each other, e.g. by mixing (in the ion exchange process/system). By mixing, the two not immiscible liquids are brought into close contact with each other in such a manner that an ion-exchange (transfer) occurs at the liquid/liquid interface. Consequently, the cations (copper) will then be present in the high flash point hydrocarbon diluent medium, whereas anions (e.g. chloride ions) will remain in the newly obtained metal-depleted acidic medium. As these two media are not miscible with each other, they will separate after some time. This may be done for example using a sedimentation basin (that may be part of the ion exchange process). The (cation enriched) high flash point hydrocarbon diluent may then be further regenerated ("stripping") with the further acid (in particular sulfuric acid), thereby enabling the production of the metal salt-containing medium (electrolyte with e.g. copper sulfate). Since the metal salt-containing medium and the (cation depleted) high flash point hydrocarbon diluent are also immiscible with each other, the metal salt (copper sulfate) may be easily separated, and the high flash point hydrocarbon diluent (hydrocarbon extraction medium) could be reused in a similar manner as an ion exchange resin. An exemplary example of a high flash point hydrocarbon diluent (hydrocarbon extraction medium) may be a mixture of 5-nonyl-salicylaldoxime with 2-hydroxy-5-nonylacetophenone oxime in a 1:1 ratio.

According to a further embodiment, providing the medium to be processed is integrated in a third process cycle that is a third (closed) loop and yields (substantially) no waste product. In this manner, acidic waste from the etching process can be efficiently recycled within one and the same circuit board/substrate manufacture.

According to a further embodiment, the third process cycle further comprises:
i) removing the acid from the medium to be processed by membrane dialysis, to provide an acid-depleted (a less acidic) medium to be processed and an acidic diffusate (in particular further acid-enriching the acidic diffusate in an acid enrichment process to obtain an acid-enriched diffusate), and
ii) feeding back the acidic diffusate and/or the acid-enriched diffusate to the etching process for producing (again) medium to be processed.

Thereby, no acidic waste (that is difficult and cost-intensive to discharge) is produced. Instead, acid from the etching process is separated from the medium to be processed and can be fed back to the etching process.

An acidic diffusate (after a membrane dialysis step for processing) which comprises only a very low concentration of metal salt (together with further separating streams of other processes) may be enriched (e.g. using gas adsorption) in acid before being transported again to the etching process. Alternatively, the acidic diffusate may be supplied to a central processing (e.g. rinsing water). While the acid may be reused in the circuit board and/or substrate manufacturing process, the metal salt (e.g. via rinsing water processing) is enriched and may be recovered again. In another embodiment, the acid is used as regenerating acid for the production of iron chloride, FeCl₃.

According to a further embodiment, providing the medium to be processed comprises: performing a hydrogen peroxide (H₂O₂) elimination process. The medium to be processed may contain oxidizing agents such as hydrogen peroxide from the etching process. These oxidizing agents may attack the membranes of membrane dialysis and/or ion exchange resin. Reduction and/or elimination of oxidizing agents may be done chemically, thermally, electrically, or catalytically. The hydrogen peroxide elimination may comprise the following chemical reaction: 2 H₂O₂ → 2 H₂O + O₂. A thermal decomposition for example occurs around 50-60°C. A catalytic reaction could be performed with for instance iron chloride (FeCl₃) as a catalyst, using an activated carbon filter, or an enzyme called catalase may be used to induce the elimination reaction. Electrical decomposition may occur as soon as a potential (voltage) is applied. Further, the hydrogen peroxide may be chemically eliminated using any reducing agent such as sodium bisulfite.

According to a further embodiment, processing is performed continuously. This may have the advantage that continuously enriching the medium to be processed takes place and the ion exchanger may be regenerated especially efficiently, respectively.

According to a further embodiment, the method further comprises diluting the medium to be processed before the ion exchange process (in particular in a mixing reactor). The acid-depleted medium to be processed may still comprise a comparably high acid concentration. Thus, a further dilution step may be advantageously/necessary. Diluting may further comprise diluting using a (processed) rinsing water from the circuit board and/or substrate manufacturing and/or the purified water. By diluting the acid depleted medium, the pH value may increase which further increases the retention capacity of the ion exchange process. Thus, more copper ions could be extracted/adsorbed by the ion exchange process.

According to a further embodiment, around 40% HCl may be saved during the described processes.

According to a further embodiment, the output streams (yielded products, waste products) may be hydrochloric acid (around 10%), water in discharge quality, a concentrate (in particular metal-depleted salt) of reverse osmosis, and 99.999% pure copper.

The aspects defined above and further aspects of the invention are apparent from the examples of embodiment to be described hereinafter and are explained with reference to these examples of embodiment.

### Brief Description of the Drawings

Figure 1 shows an overview of the partial streams in manufacturing circuit boards and/or substrates according to an embodiment of the invention.
Figures 2 to 4 show a method of processing an etching waste medium from an etching process from the circuit board and/or substrate manufacture according to embodiments of the invention.
Figure 5 shows a process control device for regulating at least a part of the above described method (and the industrial plant, respectively) according to an embodiment of the invention.

The illustrations in the drawings are schematic. In different drawings, similar or identical elements are provided with the same reference signs.

### Detailed Description of Exemplary Embodiments

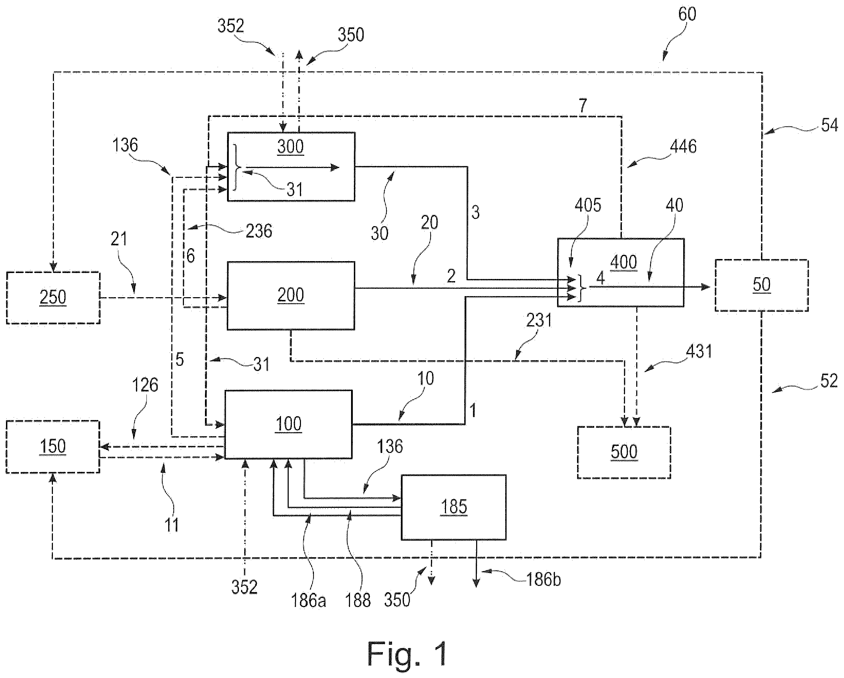

**Figure 1** shows an overview of streams 1 to 7 in a circuit boards and/or substrates manufacture, e.g. in an industrial plant 60, according to an embodiment of the invention. The method for manufacturing circuit boards and/or substrates is operated such that the occurring process residues 11, 21, 31 are conducted and fed back (and recycled, respectively) in a valuable material cycle in three main partial streams 1, 2, 3 (and in particular at least partially as total stream 4) and three main separating streams 5, 6, 7 (which in particular comprise acid residues), such that in the (shown) operating state of the manufacturing method, (substantially) only a medium 350 in discharge (supply) quality (and/or a metal depleted salt concentrate 186b) occurs as waste (in other words: substantially the only waste that leaves the manufacturing process). In other words, the medium 350 in discharge quality and/or the metal-depleted salt concentrate 186b comprises (substantially) no main components (in particular no heavy metal) of the circuit board/substrate manufacture anymore, but merely consists of (not mor than) water, salt, and organic material. In the (shown) operating state, (substantially) only water 352 and energy have to be supplied to the manufacturing method (occurring acid residues are (substantially) also fed back to the valuable material cycle). Thus, substantially only such main components (in particular heavy metal, such as copper) are supplied to the manufacturing method, which leave the manufacturing method as constituent of a finished printed circuit board and/or a substrate. In principle, in the described valuable material cycle, 95% or more, in particular 98% or more, of the heavy metal residues (e.g. copper residues) may be fed back. In an exemplary embodiment of the valuable material cycle, at least 80% (in particular at least 85%, further in particular at least 90%) of the separated hydrochloric acid is fed back, and at least 70% (in particular at least 75%, further in particular at least 80%, more in particular at least 90%, further in particular at least 95%) of the required sulfuric acid is produced method-internally. Thus, (substantially) no main components are added to the manufacturing process, which have left the manufacturing method as waste. Actually, in principle such a waste does (substantially) not occur.

The occurring process residues 11, 21, 31 and waste concentrates, respectively, may be denoted as metal salt-containing media to be processed and comprise in an exemplary embodiment amongst others: copper, copper sulfate, copper chloride, iron, nickel, gold, hydrochloric acid, sulfuric acid. The metal salt-containing media 11, 21, and 31 to be processed are respectively processed in a corresponding treatment process 100, 200, 300 and are then supplied as partial streams 1, 2, 3, which respectively comprise processed metal salt-containing medium 10, 20, 30, to a recovery process 400. After processing, recovered elementary metal 50 is finally supplied to the manufacturing process again (arrows 52 and 54). In the following, a principal overview of the partial streams 1 to 7 in the valuable material cycle is given. Further below, detailed descriptions of the processes that form the central aspect of the present document are provided.

The first partial stream 1 comprises a first processed metal salt-containing medium 10 from an etching process 150 of the circuit board and/or substrate manufacture, which is processed in a first treatment process 100. Said first process 100 may be seen as the main aspect of the present document. The first processed metal salt-containing medium 10 (which substantially comprises no metal salt to be processed) is obtained from the medium 11 to be processed from the etching process 150 as an etching waste medium. The medium 11 to be processed comprises a metal salt to be processed (e.g. copper chloride) and an acid, e.g. hydrochloric acid). Processing 100 encompasses removing the acid 15 by membrane dialysis 110, 120 (preferentially multi-stage) and performing an ion exchange process 145 (in particular a multistage ion exchange process). In a multistage membrane dialysis 110, 120, a first acid-containing diffusate 116 occurs. A second acidic diffusate 126 may be directly provided back (preferentially enriched) to the etching process 150.

In the ion exchange process 145, the metal salt to be processed (e.g. copper chloride) is exchanged by a metal salt (e.g. copper sulfate), and the metal salt containing medium 10 (e.g. copper sulfate) is thereby obtained from the medium to be processed 11 (e.g. copper chloride). The metal salt-containing medium 10 is supplied as the first partial stream 1 to an elementary metal recovery process 400 (see description below). Further, a metal-depleted acid medium 136 (e.g. hydrochloric acid) is produced during the ion exchange process 145. Said metal-depleted acid medium 136 may be (at least partially) streamed as a first separating stream 5 to a rinsing water treatment process 300 (see description below). A further part of the metal-depleted acid medium 136 (in particular after being supplied by a base (e.g. sodium chloride) 187) is streamed through a membrane filtration process implemented as a reverse osmosis process 185. The reverse osmosis process 185 yields i) a permeate (e.g. purified water 188) that is streamed back to the ion exchange process 145 (via the mixing reactor 140) or another one of the circuit board manufacturing processes of the manufacture plant 60. Further, the purified water 188 can be discharged as water in discharge quality 350 (i.e. comprising only water, and minor amounts of salt and organic). The reverse osmosis process 185 further yields ii) a salt concentrate 186a of salt and metal residues. Said salt concentrate 186a may be diluted 189 and streamed again through the ion exchange process 145. Thereby, the diluted salt concentrate 186a becomes a metal (in particular heavy metal) depleted salt concentrate 186b (i.e. comprising only salt and minor amounts of organic) which can be discharged, either as a concentrate or in diluted form. Thus, processing the waste medium 11 from the etching process 150 only yields purified water 188 (in discharge quality 350) and/or the metal-depleted salt concentrate 186b. All other generated products may be recycled within the circuit board and/or substrate manufacturing process.

The second partial stream 2 comprises a second processed metal salt-containing medium 20 from a plating process 250 of the circuit board and/or substrate manufacture. The second processed metal salt-containing medium 20 (which substantially comprises no iron) is obtained from an iron- and metal salt-containing medium 21 from the plating process 250. Processing 200 encompasses separating the iron from the iron- and metal salt-containing medium 21 by an ion exchanger. In regenerating the ion exchanger, a second acid-containing diffusate occurs, which can be supplied to the rinsing water treatment process 300 as a second separating stream 6.

The third partial stream 3 comprises a third processed metal salt-containing medium 30 from rinsing water and a rinsing water mixture 31, respectively, of the circuit board and/or substrate manufacture. The third processed metal salt-containing medium 30 is obtained in a third treatment process 300 using an ion exchanger, wherein the metal salt in the processed metal salt-containing medium 30 is enriched compared to the rinsing water mixture 31. It should be added here, that the described rinsing water treatment process 300 can also be implemented in the ion exchange process 145 or coupled with the ion exchange process 145. In this case, the (mixture of) rinsing water 31 is mixed in the mixing reactor 140 with the medium to be processed 12 and both are made subject of the ion exchange process 145 and the first process cycle 170, respectively (and optionally of the second process cycle 180 as well).

The partial streams 1, 2, 3 may be (at least partially) merged (see step 405) to a total stream 4 or may also be processed individually. Processing 400 encompasses recovering 400 the elementary metal 50 (e.g. elementary copper) from the metal salt-containing medium 50 in a (electrolysis-) reaction cell. (Continuously) adjusting the composition of the metal salt-containing medium 40 as electrolyte encompasses separating acid by membrane dialysis, wherein a third acid-containing diffusate 446 occurs. Alternatively, the diffusate 446 may be used for the regeneration of an ion exchanger for processing the rinsing waters (see third separating stream 7).

A further possibility is that no acid will be removed from the electrolyte 10 at all. Instead, the used electrolyte 175 could be used as a regenerating agent. As the acid concentration during electrolysis 400 will increase while the copper ion concentration will decrease, the used electrolyte 175 will be strongly acidic which enables better desorption of the copper ions from the ion exchange process 145. Additionally, not yet deposited copper will be kept in the process cycle. Thus, the acid concentration in the electrolyte 10 can be increased to further use it as a regenerating agent. Additionally, by not using a further membrane dialysis, water and energy could be saved.

The metal (in particular copper) also remains in the valuable material cycle and may thus be removed from the metal salt-containing medium almost completely. This has the advantage that a further processing step by membrane dialysis may be saved. The obtained highly pure metal 50 in turn is suitable to be fed back again into the etching process (see arrow 52) and/or to be fed back into the plating process 250 (see arrow 54).

A first separating stream 5 origins from the first treatment process 100 and comprises the acidic diffusate 136. A second separating stream 6 origins from the second treatment process 200 and comprises the second acid-containing diffusate 236. A third separating stream 7 origins from the treatment process of the total stream 4 and comprises the third acid-containing diffusate 446. The separating streams 5, 6, 7 respectively comprise the metal salt (e.g. copper sulfate) in low concentration, respectively in a lower concentration than the concentration of the metal salt in the third partial stream 3. The separating streams 5, 6, 7 are (at least partially) combined to a medium 31 to be processed, respectively a mixture of rinsing waters (total separating stream). Also further rinsing waters of the manufacturing method may be introduced here. The medium 31 to be processed is processed as described above by the third treatment process 300, to distinctly increase the concentration for recovering 400.

It should be added here, that the described rinsing water treatment process 300 can also be implemented in the ion exchange process 145 or coupled with the ion exchange process 145 (see above).

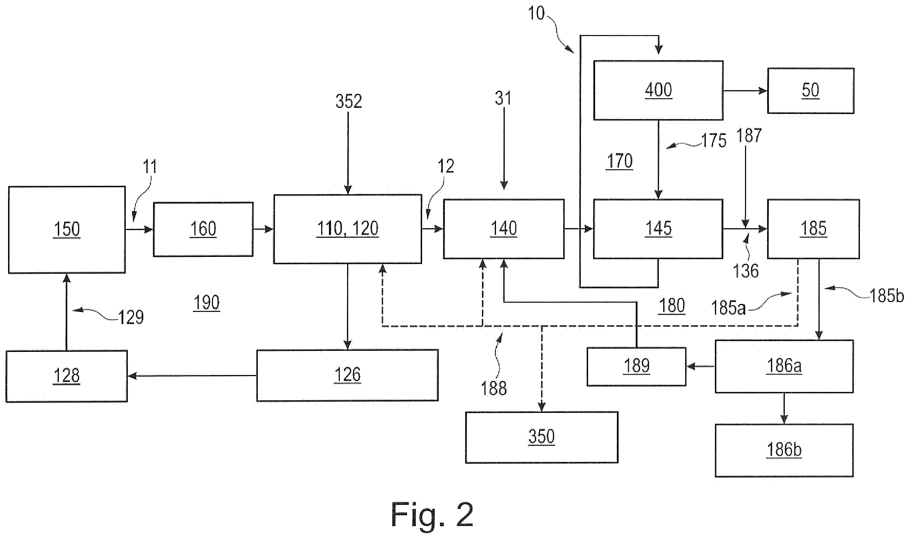

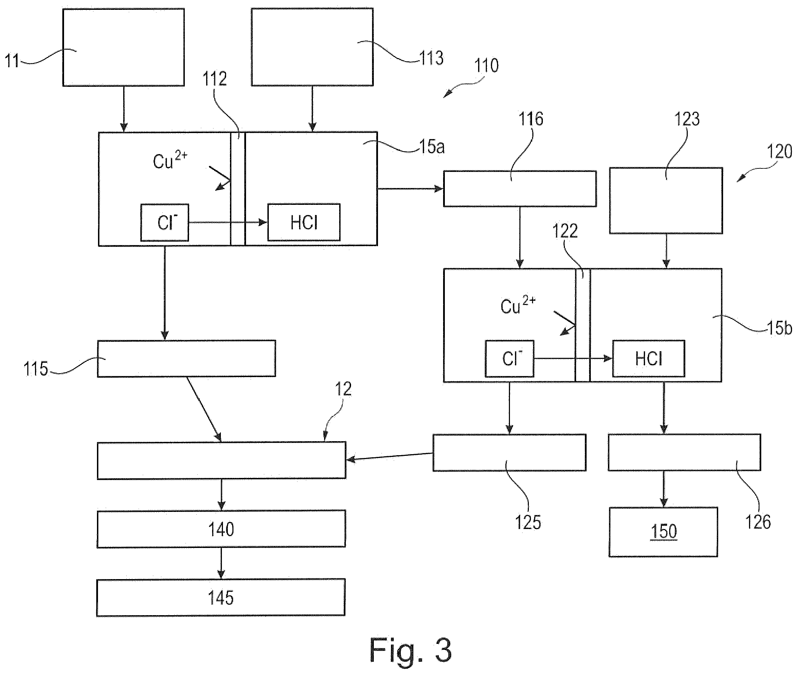

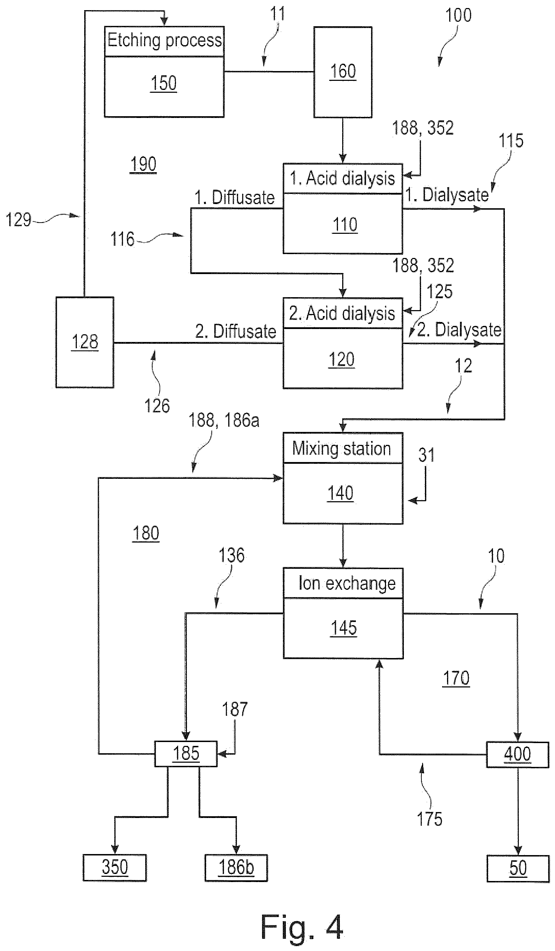

**Figure 2** shows an exemplary embodiment of the method of processing an etching waste medium from circuit board and/or substrate manufacture in detail. The etching waste medium is provided as a medium to be processed 11 from the etching process 150 and comprises a metal salt to be processed (for example copper chloride) and an acid 15 (for example hydrochloric acid). The medium to be processed 11 can comprise a high concentration of hydrogen peroxide from the etching solutions, which may disturb the following processes and damage membranes of the membrane dialysis 110, 120. Thus, the hydrogen peroxide concentration is lowered or the hydrogen peroxide is removed within a hydrogen peroxide elimination process 160, e.g. catalytic decomposition, thermic decomposition, chemical decomposition, or electric decomposition. After the hydrogen peroxide elimination 160, the medium to be processed 11 is streamed through two stages of membrane dialysis 110, 120 (see Figures 3 and 4 for detailed description).

The membrane dialysis 110, 120 is supplied by desalted water 352 which can be introduced to the process (from externally) and/or which may comprise the purified water 188 that will be produced later-on in the process and may be fed back. During the membrane dialysis 110, 120, the acid 15 is substantially removed from the medium to be processed 11 to obtain a less acidic medium to be processed 12. The acid 15 is now part of an acidic diffusate 126 (acid concentration around 10%), which can be fed back to the etching process 150. Because the etching process 150 may apply an etching medium with an acid concentration of around 30%, the acidic diffusate 126 is optionally enriched in an acid enrichment process 128. The enriched acidic medium 129 can then be fed back to the etching process 150. Hereby, the etching process 150, the hydrogen peroxide elimination 160, and the membrane dialysis 110, 120 (optionally also the acid enrichment process 128) may form a third process cycle 190 that is configured as a third closed loop which (substantially) yields no waste products (because the acid 15 is transported within a closed loop cycle).

The less acidic medium to be processed 12 is introduced to a mixing reactor 140, wherein it can be mixed with other metal salt media. For example, a rinsing water 31 can be mixed with the less acidic medium to be processed 12, wherein the rinsing water 31 comprises minor amounts of metal salt (e.g. copper sulfate) from different processes of the circuit board manufacturing process. Further, the mixing reactor 31 is applied to dilute the less acidic medium to be processed 12 (in particular, if it still contains a remarkable acid concentration). Dilution can be done, for example, using the rising water 31, external water 352 or fed back purified water 188. From the mixing reactor 140, the (mixed) medium to be processed 12 is provided to the ion exchange process 145.

The ion exchange process 145 may comprise an ion exchanger (for example an ion exchanger with an ion exchange resin) or a liquid-liquid ion exchange process. When the diluted medium to be processed 12 is streamed through the ion exchange process 145, the metal ions (e.g. copper ions) will remain (at least partially) in the ion exchange process 145, for example, copper ions are adsorbed by ion exchange resin. After streaming through the ion exchange process 145 (where the metal remained), a metal-depleted acid medium 136 is obtained. Even though this medium 136 is strongly depleted by metal, it may still contain heavy metals (also copper). Thus, the metal-depleted acid medium 136 does not have discharge quality and is further streamed to a water purification process 185.

The ion exchange process 145 is integrated in a first process cycle 170 configured as a first closed loop. Hereby, a further acid (e.g. sulfuric acid) 175, being different from the acid 15, is streamed through the ion exchange process 145, so that the further acid 175 removes the metal from the ion exchange process 145 (e.g. desorbing copper ions from ion exchange resin by exchanging them against H⁺ ions), in order to provide the metal salt containing medium 10. The further acid 175 may also be considered as a regenerating medium that comprises/consists of the further acid 175. In the exemplary example described, the metal from the ion exchange process 145 (copper) and the salt from the further acid (sulfate) lead to the metal salt (copper sulfate) containing medium 10. The metal salt containing medium 10 is transported to an elementary metal recovery process 400 (see description above) to obtain from the metal salt containing medium 10 the elementary metal 50 (e.g. elementary copper after electrolysis) and again the further acid 175 (regenerating medium). Then, in order to close the loop, the further acid 175 is fed back to the ion exchange process 145 in order to again remove the (immobilized) metal.

In an example, the further acid 175 can still contain copper as copper sulfate. This further acid 175 comprises hence an electrolyte, wherein the copper concentration is too low in order to achieve a desired copper deposition rate. In addition, the acid concentration continuously increases during electrolysis 400. Thus, the further acid 175 has a low pH value and is perfectly suitable to recover the copper adsorbed on the ion exchange process 145.

As described above, the elementary metal recovery process 400 comprises preferentially an electrolysis process, wherein the metal salt-containing medium 10 resembles a metal-enriched electrolyte that enters the electrolysis process. After the elementary metal 50 is obtained, a metal-depleted electrolyte leaves the electrolysis process, which comprises substantially the further acid 175.

The ion exchange process 145 is further integrated in a second process cycle 180 configured as a second closed loop. The second process cycle 180 comprises the water purification process 185 through which the metal-depleted acid medium 136 is streamed. From this process, the purified water 188 is obtained that can be fed back (via the mixing reactor 140) to the ion exchange process 145 within the second process cycle 180. Additionally or alternatively, the purified water 188 is fed back to a further circuit board and/or substrate manufacture process (e.g. membrane dialysis 110, 120, rinsing water treatment process 300) or is discharged as water in discharge quality 350. In an embodiment, a strong base 187 (e.g. sodium hydroxide) is added to the metal-depleted acid medium 136. The base 187 and the acid (hydrochloric acid) of the metal-depleted acid medium 136 form then a salt (e.g. sodium chloride).

Preferentially, the water treatment process 185 comprises a reverse osmosis process, wherein the permeate 185a comprises the purified water 188, and the concentrate 185b comprises a salt concentrate 186a. As stated above, the salt concentrate 186a comprises a high salt concentration (e.g. sodium chloride) from the acid 15 and also heavy metals (still from the etching process 150). Said salt concentrate 186a is fed back to the ion exchange process 145 within the second process cycle 180, so that (heavy) metal of the salt concentrate 186a remains in the ion exchange process 145 in the same manner as the metal from the medium to be processed 12 (e.g. adsorbed by an ion exchange resin). This circumstance provides a metal-depleted salt concentrate 186b, which can be discarded, either as a concentrate or in diluted form. The metal-depleted salt concentrate 186b is substantially free of heavy metals (and contains only salt and optionally water and organics). The salt concentrate 186a may be diluted in a dilution process 189 and fed back to the ion exchange process 145 as a separate stream. The salt concentrate 186a can be diluted in the mixing reactor 140 (e.g. with rinsing water 31, external water 352, purified water 188) and/or be mixed with the medium to be processed 12. Additionally or alternatively, the salt concentrate 186a may be at least partially diluted with the purified water 188 and streamed back to the ion exchange process 145 as a unified stream. The described process can be done continuously or batch-wise.

**Figure 3** shows an example of providing the less acidic medium to be processed 12 using membrane dialysis 110, 120 according to an exemplary embodiment of the invention. In the following embodiments, mostly copper is used as exemplary example. However, the same also holds for further metals, such as: nickel, cobalt, rhodium, tin, cadmium, magnesium, sodium, silver, gold. These may form metal salts with acids (e.g. hydrochloric acid, sulfuric acid, nitrous acid, phosphoric acid). According to an exemplary embodiment, from the etching process 150, copper in the medium 11 to be processed occurs in form of copper chloride (as metal salt to be processed) and hydrochloric acid occurs as acid 15. The high content of chloride ions promotes the uncontrollable formation of chlorine gas during recovering, e.g. electrolysis. Additionally, chloride ions may co-deposit at the electrode, which negatively influence the purity of the deposited copper. Thus, in the first treatment process 100, the copper chloride is converted into copper sulfate, while the free acid 15 is separated. The metal salt-containing medium 11 to be processed is collected in an overflow basin of the etching process 150 and is supplied to the first membrane dialysis 110 as dialysate 11. Furthermore, desalted water is supplied to the membrane dialysis 110 via a first diffusate feed 113. The membrane 112 may comprise e.g. a wound membrane or a plate membrane. The membrane 112 is semipermeable and enables anions (e.g. chloride) to pass (anion-membrane), while cations (e.g. Cu²⁺) cannot pass. The membrane dialysis 110 comprises a throughput in the range 0,5 to 5 L/hm² (in particular 1 to 2 L/hm²). For the membrane dialyses which are described in the following, respectively the same membrane may be utilized or (preferably) different membranes are used (e.g. according to from which (etching) process the respective metal salt-containing solution origins). An anion-membrane may be functionalized e.g. with bromine (Br⁻), wherein the carrier material may be PET or PVC, for example. In certain cases, the metal salt-containing solution may include hydrogen peroxide (H₂O₂). In this case, preferably an oxidation-resistant membrane may be used, which is based e.g. on PEEK (polyetheretherketone).

A first part of the acid 15a is removed from the medium 11 to be processed by the first membrane dialysis 110, to obtain a first dialysate 115 with a first concentration of the metal salt to be processed, and a first diffusate 116 which comprises the first part of the acid 15a. The first diffusate 116 further comprises a second concentration (which is lower than the first concentration) of the metal salt to be processed. This is due to the fact that still some of the cations pass the membrane 112, in particular when the cations form a complex and an aggregate, respectively (e.g. a copper-chlorine complex). Without wishing to be bound to any specific theory, it is presently assumed that such an aggregate formation may take place when the concentration of the cations in a solution is increased.

Subsequently, the first diffusate 116 is made subject to a second membrane dialysis 120. The first diffusate 116 is supplied to the second membrane dialysis 120 as dialysate feed. As second diffusate feed 123, desalted water is used. A second part of the acid 15b is removed from the first diffusate 116, to obtain a second dialysate 125 with a third concentration (which is lower than the second concentration) of the metal salt to be processed, and a second (acidic) diffusate 126 which comprises the second part of the acid 15b. The first diffusate 116 further comprises a second concentration of the metal salt to be processed. The second diffusate 126 comprises a fourth concentration of the metal salt to be processed which is lower than the third concentration. The concentration of cations of the metal salt to be processed in the first diffusate 116 is distinctly lower than the cation concentration in the dialysate feed 11. Thus, it is assumed that substantially no aggregates are formed anymore and only a negligible amount of cations diffuses through the membrane 112, 122. For this reason, preferably exactly two membrane dialysis-stages 110, 120 are performed. Thereby, in an advantageous manner, a high concentration of the metal salt may be achieved, while at the same time the amount of utilized liquids does not become too high.

The second diffusate 126 which only comprises a negligible amount of the metal salt to be processed, but a high acid concentration, is collected in an etching process collecting basin and is then provided to the etching process 150 of the circuit board and/or substrate manufacture again. In particular, the second diffusate 126 is processed at first. The first dialysate 115 and the second dialysate 125 are combined to provide the enriched, less acidic (or substantially acid-free) metal salt-containing medium 12 to be processed.

**Figure 4** shows again an example of providing the less acidic medium to be processed 12 using membrane dialysis 110, 120 according to an exemplary embodiment of the invention and further the ion exchange process 145 described in detail in Figure 2. Further, the first process cycle 170, the second process cycle 180, and the third process cycle 190 are shown (see description of Figure 2 for details).

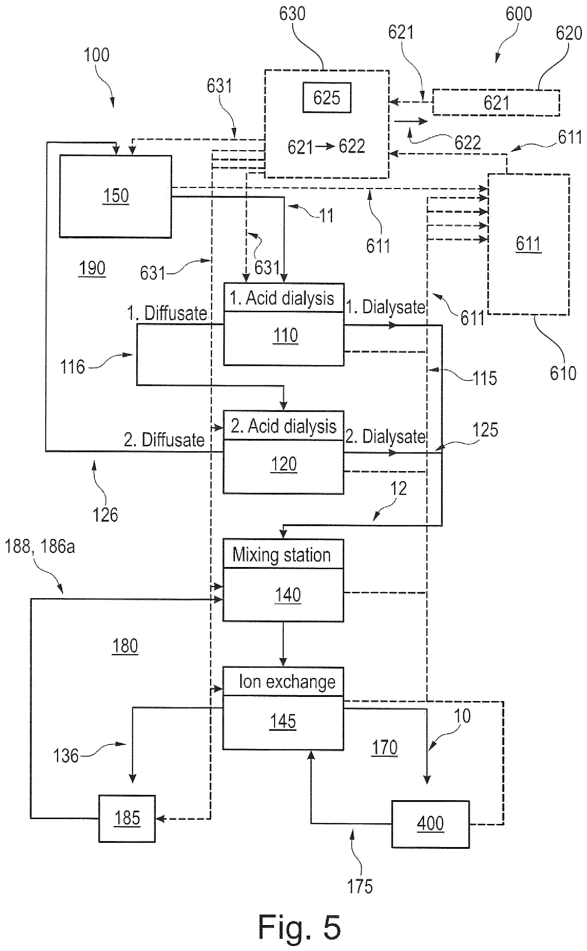

**Figure 5** shows a process control device 600 for regulating (and controlling, respectively) at least a part of the above described method (and the industrial plant 60, respectively) according to an embodiment of the invention. In the shown example, the process control device 600 is implemented in the first treatment process 100 for providing the first metal salt-containing medium 10 from an etching process 150 from the circuit board and/or substrate manufacture. In this way, the process control device 600 may also be implemented in the further (above-described) processes (and methods, respectively).

The process control device 600 comprises: i) a database 610 for capturing at least one process parameter 611 from the running (in the operating state) process (in the shown example the first treatment process 100). In the exemplary embodiment, it is shown that process parameters (values and/or ranges) 611 are captured at all processing steps (e.g. by sensors) and are supplied to the database 610. Thus, the process parameters constitute "actual"-values (e.g. HCl concentration, copper concentration, pressure difference, etc.). The process control device 600 further comprises: ii) a data model unit 620 which is adapted for storing at least one predetermined process parameter 621 (values and/or ranges). In the shown example, a multiplicity of process parameters according to one or more data models are provided in the data model unit 620 for the different process steps. Thus, these predetermined process parameters 621 constitute "target"-values. The process control device 600 further comprises: iii) a calculation device 630 (e.g. a single (separate) unit or a multiplicity of units) which is adapted for a) comparing the captured process parameter 611 (respectively the multiplicity of these parameters) with the predetermined process parameter 621 (respectively the multiplicity of these parameters) (e.g. comparison "actual"-value with "target"-value), b) determining a control operation 631 which is based on the result of the comparison (actively balancing a difference between "actual"-value and "target"-value, for example), and c) performing the determined control operation 631 (e.g. adapting a flow rate).

According to an exemplary embodiment of the (software-based) process control device 600, the database 610 collects data from the running process (process parameters 611), respectively accesses values from a previous process step (process parameters 611), and thus archives (all) "actual"-values. A data model and multiple data models which are depending on each other, respectively, (which are stored in the data model unit 620, e.g. also in form of a database) include, amongst others, "target"-values (and "target"-ranges), optionally also their relations and variables (e.g. data models 621 as reference values/reference models which are used for verification of the "actual"-values 611). The calculation device 630 compares the "actual"-values with the "target"-values (respectively performs a calculation step based on the data models 621 in combination with the "actual"-values 611) and subsequently sets an action (control operation 631) corresponding to the comparison result (e.g. "actual"-value corresponds to the "target"-value, "actual"-value deviates from the "target"-value, "actual"-value fulfills specific criteria, etc.). The determined control operation 631 may comprise (at least a part of) a method step as described above.

According to an exemplary embodiment, the calculation device 630 comprises a self-learning algorithm (AI) 625 (e.g. realized by neuronal networks) for comparing and/or for determining. The self-learning algorithm 625 is adapted to automatically perform the determined control operation 631 and/or to provide it to a user for verification. Furthermore, the self-learning algorithm 625 is adapted, based on the comparison, to determine a new predetermined process parameter 622 and to automatically supply it to the data model unit 620 and/or to provide it to the user for verification. Preferably, the self-learning algorithm 625 is adapted to use the result of the verification by the user as a basis for learning. According to an exemplary embodiment, the calculation unit 630 comprises a self-learning algorithm 625 which sets actions (control operations 631) which are either directly implemented in the system, or are provided to the operator for verification. In addition, the decision of the operator at the verification may in turn form the basis for learning for the AI-function. Furthermore, based on the captured "actual"-values 611, the AI may create and suggest, respectively, new "target"-values/ranges 621 which are taken into the data model either in an automatic or in an operator-controlled manner.

In a specific embodiment, the following process parameters 611 are monitored and measured, respectively (in the following, respectively an exemplary measuring method is specified), and captured in the database 610:
i) filling levels; by ultrasonic measurements,
ii) volume streams; by flowmeter,
iii) H₂O₂ concentration; via the redox potential,
iv) acid concentration; pH-value (in-line) or titration (draw samples),
v) organic matter concentration; photometrically (in-line) or cyclic voltammetry (draw samples),
vi) chloride concentration; titration (draw samples),
vii) iron/copper concentration; photometrically or density measurements (in-line) or titration (draw samples),
viii) temperature; temperature sensors (in-line),
ix) pressure difference in the membrane dialysis between diffusate and dialysate; pressure sensors (in-line).

In this specific embodiment, after comparing (and evaluating, data analysis) the determined (measured) process parameters 611 and the predetermined process parameters 621 by the calculation device 630, e.g. the following control operations 631 (and actions, respectively) are determined and performed (and triggered, respectively) by the calculation device 630:
i) chlorine gas formation (e.g. via gas sensors); control operation: electrolysis off,
ii) too high peroxide load; control operation: no loading of the ion exchanger for processing the rinsing waters,
iii) too low filling level; control operation: pumps off,
iv) too high iron concentration in the electrolyte; control operation: switching on the ion exchange resin,
v) too high acid concentration in the electrolyte; control operation: switching on the membrane dialysis or pumping out the electrolysis cell,
vi) low copper concentration in the electrolyte; control operation: pumping out the electrolysis cell and delivering the electrolyte to the preprocessing tank of the rinsing waters,
vii) too high pressure difference in the membrane dialysis; control operation: adapt volume streams (flow rate),
viii) copper concentration in the permeate of the ion exchanger for processing the rinsing waters; control operation: regenerating,
ix) iron concentration in the permeate of the ion exchanger for eliminating iron from the plating wastewaters; control operation: regenerating,
x) too high chloride concentration in the dialysate; control operation: adapt volume streams (flow rate).

### Reference signs

1, 2, 3 First partial stream, second partial stream, third partial stream
   4 Total stream
   5, 6, 7 First separating stream, second separating stream, third separating stream
   40 Metal salt-containing medium, electrolyte
   50 Elementary metal (copper)
   52 Metal feedback to etching process
   54 Metal feedback to plating process
   60 Industrial plant for manufacturing printed circuit boards
100 Processing a metal salt-containing (waste) medium from an etching process from the manufacture of printed circuit boards
10 Metal salt-containing medium, metal-enriched electrolyte
   11 Medium to be processed
   12 Acid free medium to be processed
   15 Acid
   15a First part acid
   15b Second part acid
   110 First membrane dialysis
   112 First membrane
   113 First feed
   115 First dialysate
   116 First diffusate
   120 Second membrane dialysis
   122 Second membrane
   123 Second feed
   125 Second dialysate
   126 Second diffusate, acidic diffusate
   128 Acid enrichment process
   129 Enriched acid, acid-enriched diffusate
   136 Metal-depleted acid medium (first separating stream)
   140 Mixing/dilution reactor
   145 Ion exchange process
   150 Etching process
   160 Peroxide elimination process
   170 First process cycle
   175 Further acid, regenerating medium, metal-depleted electrolyte 180 Second process cycle
   185 Membrane filtration process, reverse osmosis process
   185a Permeate
   185b Concentrate
   186a Salt concentrate
   186b Metal-depleted salt concentrate
   187 Base, sodium hydroxide
   188 Purified water
   189 Additional dilution process
   190 Third process cycle
200 Processing a metal salt and foreign metal-containing medium from a plating process from the manufacture of printed circuit boards
   20 Metal salt-containing medium
   21 Iron- and metal salt-containing medium
   231 Providing (iron-enriched acid) to circuit board process
   236 Acid-containing diffusate, second separating stream
   250 Plating process
300 Processing a metal salt-containing medium from rinsing water from the manufacture of printed circuit boards
   30 Metal salt-containing rinsing water medium
   31 Medium to be processed, total separating stream
   32 Further rinsing water
   350 Waste medium, water with discharge quality
   352 Supply water
400 Recovering an elementary metal from a metal salt-containing medium from the manufacture of printed circuit boards
   405 Providing, combining, enriching
   431 Providing (iron-enriched acid) to further circuit board process
   446 Diffusate with acid (third separating stream)
   500 Further circuit board process, photoresist (iron-chloride) process
600 Process control device
   610 Database
   611 Process parameter, actual-value
   620 Data model unit
   621 Predetermined process parameter, target-value
   622 New predetermined process parameter
   625 Self-learning algorithm
   630 Calculation device
   631 Determined control operation

## Claims

1. A method of processing an etching waste medium from circuit board and/or substrate manufacture, the method comprising:
providing the etching waste medium as a medium to be processed (11), in particular from an etching process (150), wherein the medium to be processed (11) comprises a metal salt to be processed and an acid (15);
processing the medium to be processed (11) in an ion exchange process (145), so that the metal salt to be processed is exchanged by a metal salt, and a metal salt containing medium (10) is obtained from the medium to be processed (11); hereby
streaming a first process cycle (170) through the ion exchange process (145), wherein the first process cycle (170) is a first closed loop that yields substantially only elementary metal (50); and
streaming a second process cycle (180) through the ion exchange process (145), wherein the second process cycle (180) is a second closed loop that yields substantially only purified water (188) and/or a metal-depleted salt concentrate (186b).

2. The method according to claim 1,
wherein the metal in the metal salt and the metal in the metal salt to be processed is the same metal, and
wherein the metal is at least one of the group which is consisting of: copper, nickel, cobalt, tin, cadmium, magnesium, sodium, silver, gold; and/or
wherein the salt in the metal salt and the salt in the metal salt to be processed are different salts, and
wherein the salts comprise at least two of the group which consist of a chloride, a sulfate, a nitrate, a phosphate.

3. The method according to claim 1 or 2,
wherein the first process cycle (170) further comprises:
streaming a further acid (175), being different from the acid (15), through the ion exchange process (145), in particular as a regenerating medium, so that the further acid (175) removes the metal from the ion exchange process (145), in order to provide the metal salt containing medium (10);
transporting the metal salt containing medium (10) to an elementary metal recovery process (400) to obtain the elementary metal (50) and the further acid (175) from the metal salt containing medium (10); and
feeding back the further acid (175) to the ion exchange process (145).

4. The method according to claim 3,
wherein the elementary metal recovery process (400) comprises an electrolysis process,
wherein the metal salt-containing medium (10) resembles a metal-enriched electrolyte that enters the electrolysis process, and
wherein the further acid (175) resembles a metal-depleted electrolyte that leaves the electrolysis process.

5. The method according to any one of the preceding claims,
wherein the second process cycle (180) further comprises:
streaming the medium to be processed (11) through the ion exchange process (145), wherein the medium to be processed (11) is separated into the metal, which then remains in the ion exchange process (145) and a metal-depleted acid medium (136);
processing the metal-depleted acid medium (136) in a water treatment process (185), so that the purified water (188) is obtained; and
feeding back the purified water (188) to the ion exchange process (145), and/or
feeding back the purified water (188) to a further circuit board and/or substrate manufacture process (110, 120, 140, 300),
and/or
discharging the purified water (188) as a water in discharge quality (350).

6. The method according to claim 5,
wherein the water treatment process (185) comprises a membrane filtration process,
wherein the permeate (185a) comprises the purified water (188), and
wherein the concentrate (185b) comprises a salt concentrate (186a).

7. The method according to claim 6,
wherein the second process cycle (180) further comprises:
feeding the salt concentrate (186a) back to the ion exchange process (145), so that metal of the salt concentrate (186a) remains in the ion exchange process (145); and thereby
providing the metal-depleted salt concentrate (186b).

8. The method according to claim 7,
wherein the metal-depleted salt concentrate (186b) is substantially free of heavy metals.

9. The method according to any one of the claims 5 to 8, wherein the method further comprises:
adding a base (187) to the metal-depleted acid medium (136),
wherein the base (187) and the acid of the metal-depleted acid medium (136) form the salt of the salt concentrate (186a).

10. The method according to any one of the preceding claims,
wherein the ion exchange process (145) comprises:
applying an ion exchanger with an ion exchange resin; and/or
applying a liquid/liquid extraction using a hydrocarbon-based ion exchange medium.

11. The method according to any one of the preceding claims,
wherein providing the medium to be processed (11) is integrated in a third process cycle (190) that is a third closed loop and yields substantially no waste product.

12. The method according to claim 11,
wherein the third process cycle (190) comprises:
removing the acid (15) from the medium to be processed (11) by membrane dialysis (110, 120), to provide an acid-free medium to be processed (12) and an acidic diffusate (126),
in particular further acid-enriching the acidic diffusate (126) in an acid enrichment process (128) to obtain an acid-enriched diffusate (129); and
feeding back the acidic diffusate (126) and/or the acid-enriched diffusate (129) to the etching process (150) for producing the medium to be processed (11).

13. The method according to any one of the preceding claims,
wherein providing the medium to be processed (11) comprises:
performing a hydrogen peroxide, H₂O₂, elimination process (160).

14. A circuit board and/or substrate manufacture industrial plant (60), comprising:
an etching process module (150) that produces an etching waste medium as a medium to be processed (11), wherein the medium to be processed (11) comprises a metal salt to be processed and an acid (15);
an ion exchange process module (145) configured to process the medium to be processed (11), so that the metal salt to be processed is exchanged by a metal salt, and a metal salt containing medium (10) is obtained from the medium to be processed (11);
a first process cycle (170) streaming through the ion exchange process module (145), wherein the first process cycle (170) is a first closed loop that yields substantially only the elementary metal (50); and
a second process cycle (180) streaming through the ion exchange process (145), wherein the second process cycle (180) is a second closed loop that yields substantially only purified water (188) and/or a metal-depleted salt concentrate (186b).

15. Using an ion exchange process (145), coupled to an electrolysis process (400) in a first closed loop process cycle (170) and a membrane filtration (185) in a second closed loop process cycle (180), to process a circuit board and/or substrate manufacture etching waste water (11) such that substantially only elementary copper (50), purified water (188), and a heavy metal-depleted salt concentrate (186b) are yielded.
